# EUROPÄISCHE PATENTSCHRIFT

(11) **EP 0 604 887 B1**
(45) Veröffentlichungstag und Bekanntmachung des Hinweises auf die Patenterteilung: **20.11.1996**
(21) Anmeldenummer: 93120640.3
(22) Anmeldetag: 21.12.1993
(51) Int. Cl.: F16D 7/02

(54) **Nachstellbare Rutschkupplung**
Adjustable slipping clutch
Embrayage à glissement réglable

(30) Priorität: 30.12.1992 DE 4244501
(43) Veröffentlichungstag der Anmeldung: 06.07.1994
(73) Patentinhaber: W.u.H. Neukirchen GmbH & Co. KG, D-41747 Viersen (DE)
(72) Erfinder: Neukirchen, Herbert Josef, D-41179 Mönchengladbach (DE); Sieger, Hans Johann, D-41061 Mönchengladbach (DE)
(74) Vertreter: Cohausz & Florack

(56) Entgegenhaltungen:
- AT-B- 386 465
- AT-B- 389 575
- CH-A- 489 724
- DD-A- 262 701
- DE-A- 2 702 178
- DE-A- 2 747 466
- DE-A- 3 045 070
- DE-C- 3 432 551
- GB-A- 1 232 730
- GB-A- 1 312 207
- US-A- 1 804 113
- US-A- 4 249 397

## Beschreibung

Die Erfindung betrifft eine nachstellbare, koaxial zu einer Welle angeordnete Rutschkupplung mit Reibscheiben, von denen mindestens eine durch ein Druckfederpaket federbelastet ist, welches an einem zur Verstellung der Kupplungskraft koaxial zu der Welle beweglichen Druckstück gestützt ist.

Derartige Rutschkupplungen sind aus der Praxis bekannt und dienen beispielsweise als Sicherheitskupplung zwischen dem Antriebsmotor und dem Getriebe einer Arbeitsmaschine. Die bekannten Rutschkupplungen weisen ein oder mehrere Reibscheiben auf, über die das Antriebsmoment des Motors auf die Antriebswelle des Getriebes übertragen wird. Um die für diese Kraftübertragung notwendige Reibkraft zu erzeugen, ist mindestens eine der jeweils äußeren Reibscheiben der Kupplung mittels Druckfedern derart druckkraftbeaufschlagt, daß eine kraftschlüssige Verbindung zwischen der Abtriebwelle des Motors und der Antriebswelle des Getriebes hergestellt ist. Dabei ist die Anpreßkraft der Federn so eingestellt, daß die Kupplung bei einer zu hohen Belastung oder einer Blockierung des Getriebes durchrutscht.

Rutschkupplungen dieser Art weisen nach einer bestimmten Betriebsdauer einen Verschleiß auf, der durch einen nicht zu vermeidenden Schlupf beim Anfahren der Maschine oder während des Maschineneinsatzes verursacht wird. Die Folge ist eine Verminderung der Druckkraft. Daher ist es notwendig, die Druckkraft der Federn in vorgegebenen Zeitintervallen nachzustellen.

Zu diesem Zweck ist es aus der US-A-4 249 397 bekannt, bei einer solchen Kupplung den Federweg der Druckfedern durch Verdrehen einer mit einem Außengewinde der Welle verschraubten Einstellmutter zu verkürzen.

Nachteilig bei dieser Art der Nachstellung ist, daß die Druckkraft der Druckfedern nur ungenau eingestellt werden kann oder hohe Herstellkosten für ein fein abgestuftes Gewinde in Kauf genommen werden müssen.

Bei anderen bekannten Kupplungen besteht ein weiterer Nachteil darin, daß für das Nachstellen Werkzeuge mit großen räumlichen Abmessungen benötigt werden. Dieser Nachteil erweist sich besonders dann als Problem, wenn die Kupplung mit der Getriebewelle in einem geschlossenen Getriebegehäuse betrieben werden soll und nur eine kleine Öffnung zum Einführen des Werkzeugs zur Verfügung steht.

Um diesen Nachteil zu umgehen, ist es aus der Praxis bekannt, die Einstellmuttern mit Ausnehmungen zu versehen, in die Werkzeuge zum Festhalten der Mutter einsteckbar sind. Das Verstellen der Einstellmutter kann dann durch Verdrehen der Getriebewelle erfolgen. Nachteilig an diesem Vorgehen ist jedoch, daß es im allgemeinen nur schwer möglich ist, die Getriebewelle bei mit dem Motor verkoppeltem Getriebe im ausreichenden Maße zu verdrehen.

Eine andere Art der Nachstellung einer verschlissenen Rutschkupplung ist aus der deutschen Offenlegungsschrift DE-OS 27 02 178 bekannt, bei der zwischen der Antriebswelle und dem Kettenrad eines Hobeltriebwerks ebenfalls eine Rutschkupplung vorgesehen ist. Dies Rutschkupplung ist bei dem bekannten Stand der Technik durch Kupplungsbolzen gebildet, die mit ihrer kegeligen Spitze in eine Kegelnut des Kettenrades eingreifen und mit ihrem dieser Spitze abgewandten Ende auf einem Zentrierring abgestützt sind, dessen Oberfläche zum Mittelpunkt des Rings hin angeschrägt ist. Der Zentrierring sitzt dabei in einem als Gewindering ausgebildeten Andrückring ein, so daß ein Verdrehen des Andrückrings eine radiale Bewegung der Keilfläche des Zentrierrings und damit eine axiale Verstellung der Kupplungsbolzen mit sich bringt. Ähnlich wie bei dem beschriebenen, aus der Praxis bekannten Stand der Technik ist es auch bei dieser Vorrichtung nur schwer möglich, die von den Bolzen aufgebrachte Kupplungskraft exakt einzustellen. Darüber hinaus wird auch bei dieser Vorrichtung ein Werkzeug mit großen Abmessungen zur Verstellung der Kupplung benötigt.

Ein mit der vorstehend beschriebenen Vorrichtung vergleichbarer Stand der Technik ist aus der deutschen Patentschrift DE 34 32 551 C1 bekannt. Bei dieser Vorrichtung sind die Kupplungsbolzen jedoch nicht achsparallel zu der Antriebswelle, sondern rechtwinklig zu dieser angeordnet, so daß es zur Verstellung der von diesen Kupplungsbolzen aufgebrachten Kupplungskraft notwendig ist, die Kupplungsbolzen bezogen auf die Antriebswelle radial zu bewegen. Zu diesem Zweck sind die Kupplungsbolzen auf der Keilfläche eines achsparallel zu der Antriebswelle verschiebbaren Zentrierrings abgestützt, der wiederum durch einen Andrückring koaxial zu der Antriebswelle bewegt werden kann. Diese Bewegung erfolgt durch Stellschrauben, die ebenfalls achsparallel zu der Antriebswelle angeordnet sind. Auch bei diesem Stand der Technik ergibt sich das Problem, daß die Stellschrauben nur schwer zugänglich sind und ein großer Raum erforderlich ist, um diese zu verstellen.

Des weiteren ist aus der deutschen Offenlegungsschrift DE-OS 27 47 466 eine Elektromagnet-Bremse bekannt, bei derReibbeläge an einem drehfest, aber axial beweglich angeordneten Gehäuse befestigt sind, in dem Elektromagneten untergebracht sind. Bei Betätigung der Elektromagneten wird eine mit einer Antriebswelle drehfest verbundene, auf dieser aber axial verschiebbare Ankerscheibe gegen die Reibbeläge gezogen, so daß die Antriebswelle abgebremst wird. Um den bei der Abbremsung entstehenden Verschleiß der Reibbeläge zu kompensieren, kann das Gehäuse mit den Reibbelägen mittels einer Stellschraube achsparallel zu der Antriebswelle auf die Ankerscheibe zubewegt werden. Diese Stellschraube weist eine kegelige, an dem Gehäuse anliegende Spitze auf und ist rechtwinklig zu der Antriebswelle ausgerichtet durch ein die gesamte Kupplung umgebendes Gehäuse hindurchgesteckt, so daß eine radiale Zustellung der Stellschraube die achsparallele Verschiebung des Gehäuses mit den Reibbelägen bewirkt. Der Vorteil dieser Vorrichtung besteht darin, daß das Nachstellen der Bremse von außerhalb des Gehäuses erfolgen kann. Dazu ist es jedoch erforderlich, daß das eigentliche Bremselement drehfest angeordnet ist und die Bremskraft durch einen Elektromagneten aufgebracht wird. Die bei der bekannten Elektromagnet-Bremse verwirklichte Nachstelleinrichtung ist daher ungeeignet zum Nachstellen solcher Rutschkupplungen, die drehfest mit den jeweiligen Wellen verbunden sind.

Eine andere Möglichkeit des Nachstellens einer verschlissenen Kupplung ist aus der amerikanischen Patentschrift US-PS 1 804 113 für eine ausrückbare Kupplung bekannt, bei der die zum Lösen der Kupplung bestimmten Elemente mit einem Ring verbunden sind, die auf einer der Kupplungshälften koaxial zu der mit dieser Kupplungshälfte verbundenen Antriebswelle nach Art einer Schraubenmutter aufgeschraubt ist. Ein Verdrehen dieses Rings bewirkt somit, daß sich die betreffende Kupplungshälfte auf die andere Hälfte der Kupplung zubewegt, so daß ein Verschleiß des zwischen den Kupplungshälften einliegenden Reibbelages ausgeglichen wird. Da auch bei diesem Stand der Technik das Nachstellen der Kupplung unmittelbar über eine Schraubenmutterkombination erfolgt, kann der Verschleiß des Kupplungsbelages ähnlich wie bei dem vorangehend erläuterten vergleichbaren Stand der Technik nur ungenau nachgestellt werden, wobei für die Nachstellbewegung und das Nachstellen selbst zusätzlich ein großer Raum benötigt wird.

Schließlich ist aus schweizerischen Patent CH-PS 489 724 eine Rutschkupplung bekannt, bei der die Reibbeläge mittels eines Keilstückes gegen die ihnen zugeordneten Kupplungshälften gedrückt werden. Dabei ist das Kegelstück durch die Kraft eines Federrings dauerhaft federkraftbelastet, so daß jeder Verschleiß der Kupplungsbeläge durch eine radiale Zustellbewegung des Keilstückes und eine damit verbundene axiale Bewegung der Reibbeläge ausgeglichen wird. Der Vorzug der bekannten Vorrichtung liegt darin, daß der Verschleiß der Reibbeläge selbsttätig ausgeglichen wird. Nachteilig ist jedoch dabei, daß diese Kupplung nicht zur Übertragung größerer Kräfte geeignet ist.

Ausgehend von der US-A-4 249 397 besteht die Aufgabe der Erfindung darin, eine Rutschkupplung der eingangs genannten Art mit einfachen Mitteln dahingehend zu verbessern, daß der Federweg der Druckfeder mit einer erhöhten Genauigkeit auf einfache Weise nachstellbar ist.

Diese Aufgabe wird erfindungsgemäß dadurch gelöst, daß das Druckstück durch radial gegenüber der Welle verstellbare Keilstücke verschiebbar ist, die an mindestens einem koaxial zu der Welle angeordneten und mit dieser verbundenen Stützring abgestützt und durch einen gemeinsamen Stellantrieb verstellbar sind.

Gemäß der Erfindung erfolgt das Nachstellen der Federn nicht mehr über eine auf der Welle sitzende Einstellmutter, sondern über Keilstücke, die in radialer Richtung auf die Welle zustellbar oder von dieser wegbewegbar sind. Dabei bewirken die Keilflächen der Keilstücke ein Umlenken der radialen Zustellbewegung der Keilstücke in eine achsparallele Verschiebewegung des Druckstückes, durch die die Druckfedern nachgestellt werden. Die Genauigkeit dieser Nachstellbewegung kann durch eine entsprechende Wahl des Keilwinkels in Verbindung mit dem Vorschub des Stellantriebes vorgewählt werden. Die Verstellung der Keilstücke ist dabei leicht möglich, da diese gemeinsam durch den Stellantrieb verschoben werden, der auf alle Keilstücke im gleichen Maße wirkt. Da somit die Einstellmutter für das Nachstellen der Druckfedern nicht mehr benötigt wird, kann auf ein kostenaufwendiges Feingewinde an der Welle verzichtet werden.

Eine leicht herzustellende und in der praktischen Erprobung bewährte Rutschkupplung ist dadurch gekennzeichnet, daß die Keilstücke paarweise jeweils einander gegenüberliegend an der Welle angeordnet sind und der gemeinsame Stellantrieb durch jeweils eine verdrehbare Gewindestange gebildet ist, die durch eine Querbohrung der Welle gesteckt ist und deren Abschnitte jeweils gegenläufige Gewinde aufweisen,, die in entsprechende Gewindebohrungen der Keilstücke eingreifen. Ist die Gewindestange zudem an mindestens einem ihrer Enden stirnseitig als Angriffskopf für ein Werkzeug zum Verdrehen der Gewindestange ausgebildet, kann die Nachstellung der Druckfedern mit Hilfe eines Werkzeuges mit besonders kleinen Abmessungen vorgenommen werden. Eine derartige Ausgestaltung der Erfindung ist besonders dann günstig, wenn die Rutschkupplung in einem geschlossenen Gehäuse umläuft und nur eine verschließbare Öffnung von geringem Durchmesser zum Einführen des Werkzeugs in das Gehäuse vorhanden ist.

Bei einer alternativen Ausführung der Erfindung ist der gemeinsame Stellantrieb durch ein an den Keilstücken anliegende Spannband gebildet. Diese Ausgestaltung der Erfindung ermöglicht es, die Keilstücke als Kreissegmente auszubilden und um den Umfang der Welle verteilt anzuordnen. Auf diese Weise kann ein Verkanten des zweiten Druckstückes auf der Welle sicher vermieden und eine gleichmäßige Krafteinwirkung des Druckfederpaketes auf die Rutschkupplung erreicht werden.

Die Nachstellbarkeit der Kupplung kann dadurch zusätzlich erleichtert werden, daß die den Keilstücken zugeordnete Fläche des Stützrings als Keilfläche ausgebildet ist. Alternativ dazu kann zwischen dem Stützring und den Keilstücken ein zweites Druckstück angeordnet sein, dessen den Keilstücken zugeordnete Fläche als Keilfläche ausgebildet ist. Besonders einfach ist diese Ausführung zu verwirklichen, wenn das zweite Druckstück durch eine Tellerfeder gebildet ist.

Die Montage der erfindungsgemäßen Rutschkupplung kann dadurch vereinfacht werden, daß der Stützring durch eine Einstellmutter gebildet ist, die auf ein Außengewinde der Welle aufschraubbar ist. Bei einer derartigen Ausgestaltung der Erfindung kann beim Zusammenbau der Kupplung eine grobe Voreinstellung der Kupplungskraft durch Verdrehen der Einstellmutter vorgenommen werden. Dazu ist ein kostengünstig herstellbares Grobgewinde ausreichend, da das Nachstellen der Druckkraft mit der erforderlichen Genauigkeit bei fertigmontierter Kupplung durch eine Verstellung der erfindungsgemäßen Keilstücke erfolgen kann.

Die bei einer Verschiebung der Keilstücke durch diese verursachte Axialbewegung der Federn kann dadurch vergrößert werden, daß die Keilstücke als Doppelkeil ausgebildet sind. In diesem Fall sollte auch die den Keilstücken zugeordnete Fläche des ersten Druckstückes als Keilfläche ausgebildet sein.

Eine vielseitige Einstellbarkeit und Verwendbarkeit der Rutschkupplung ist dann gegeben, wenn die Querbohrung als Langloch ausgebildet ist, dessen Öffnung sich achsparallel zur Welle erstreckt.

Nachfolgend wird die Erfindung anhand einer ein Ausführungsbeispiel zeigenden Zeichnung näher erläutert:

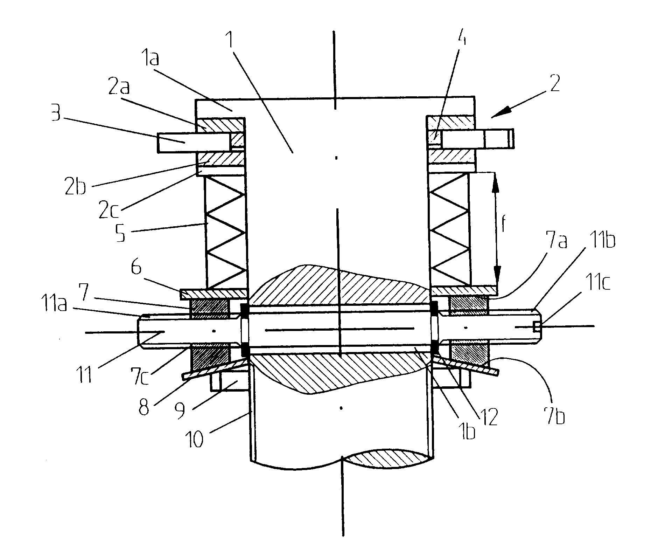

Die Zeichnung zeigt eine in einem nicht gezeigten geschlossenen Getriebegehäuse im Ölbad umlaufende Welle 1 mit einer an ihrem Ende angeordneten Rutschkupplung 2, die koaxial zu der Welle 1 angeordnete Reibbeläge 2a,b aufweist. Der erste Reibbelag 2a ist mit einem Wellenabsatz 1a der Welle 1 drehfest verbunden, während der zweite Reibbelag 2b an einer koaxial zu der Welle 1 verschiebbaren ersten Reibscheibe 2c befestigt ist. Zwischen den Reibbelägen 2a,b ist ebenfalls koaxial zur Welle 1 ein Zahnkranz 3 eingelegt, der auf einem auf der Welle 1 sitzenden Laufring 4 angeordnet ist und mit der Abtriebswelle eines nicht gezeigten Antriebsmotors in Eingriff steht.

Die Reibscheibe 2c ist durch die Federkraft eines aus sechs Tellerfedern gebildeten Tellerfederpaketes 5 druckfederbelastet, das koaxial zu der Welle 1 angeordnet und zwischen der Reibscheibe 2c und einem lochscheibenförmig ausgebildeten, ebenfalls koaxial zur Welle 1 angeordneten ersten Druckstück 6 eingespannt ist. Das Druckstück 6 ist mit seiner unteren Seite an der oberen, rechtwinklig zu der Welle 1 sich erstreckenden Seite 7a zweier einander gegenüberliegend beidseitig zur Welle 1 angeordneter Keilstücke 7 abgestützt. Die Keilstücke 7 sind wiederum an ihrer keilförmig ausgebildeten Unterseite 7b über eine als ein zweites Druckstück wirkende Tellerfeder 8 an einer Einstellmutter 10 abgestützt, die auf einem an der Außenseite der Welle 1 ausgebildeten Außengewinde 9 selbsthemmend aufgeschraubt ist.

Zum radialen Verschieben der Keilstücke 7 ist eine Gewindestange 11 vorgesehen, welche in einer als Langloch ausgebildeten Querbohrung 1b der Welle 1 eingesteckt ist. An den Enden der Gewindestange 11 sind zueinander gegenläufige Außengewinde 11a,b ausgebildet, welche mit den Gewinden von Gewindebohrungen 7c der Keilstücke 7 zusammenwirken und selbsthemmend ausgebildet sind. Die Gewindestange 11 ist an einem Ende als Angriffskopf eines Werkzeuges ausgebildet, indem sie stirnseitig Einkerbungen 11c aufweist, in die die Klinge eines Schraubendrehers zum Verdrehen der Gewindestange 11 ansteckbar ist. Die Gewindestange 11 ist durch Seegeringe 12 in der Querbohrung 1b gesichert.

Bei der Grundmontage der Kupplung wird durch Aufschrauben der Einstellschraube 9 auf das Gewinde 10 eine Voreinstellung der durch das Federpaket 5 auf die Rutschkupplung 2 wirkenden Druckkraft vorgenommen. Dies wird dadurch ermöglicht, daß die Gewindestange 11 innerhalb der als Langloch ausgebildeten Querbohrung 1b axial verschiebbar ist, so daß auch die Keilstücke 7, die Tellerfeder 8 und die Druckstücke 6 beim Verdrehen der Einstellmutter 9 achsparallel zur Welle 1 verschoben werden. Auf diese Weise kann die Grundeinstellung der Rutschkupplung 2 innerhalb eines weiten Bereichs variiert werden.

Zum Nachstellen der Rutschkupplung 2 im eingebauten Zustand wird die Welle 1 gedreht, bis ein Schraubendreher durch eine Öffnung des Getriebegehäuses in die Einkerbung 11c einführbar ist. Dann wird die Welle 1 gegen ein weiteres Verdrehen gesichert und die Gewindestange 11 mittels des Schraubendrehers verdreht. Durch die Verdrehung der Gewindestange 11 werden die Keilstücke 7 aufgrund der Gegenläufigkeit der Gewindeabschnitte 11a,b radial zur Welle 1 aufeinander zubewegt. Dabei gleiten die Keilstücke 7 mit ihrer angeschrägten Unterseite 7b auf der Tellerfeder 8, so daß die radiale Zustellbewegung der Keilstücke 7 in eine axiale Bewegung des Druckstückes 6 umgewandelt wird. Durch diese Bewegung wird der Federweg f des Federpaketes 5 weiter vermindert. Gleichzeitig wird auch die Gewindestange 11 innerhalb der Querbohrung 1b achsparallel zur Welle 1 um den gleichen Betrag verschoben. Auf diese Weise wird die von dem Tellerfederpaket 5 auf die Rutschkupplung 2 ausgeübte Druckkraft erhöht, so daß nach dem Nachstellen der Rutschkupplung 2 wieder eine ausreichende Kupplungskraft zur Übertragung des Antriebsmomentes auf das Getriebe gewährleistet ist.

## Patentansprüche

1. Nachstellbare, koaxial zu einer Welle (1) angeordnete Rutschkupplung (2) mit Reibscheiben (2c), von denen mindestens eine durch ein Druckfederpaket (5) federbelastet ist, welches an einem zur Verstellung der Kupplungskraft koaxial zu der Welle (1) beweglichen Druckstück (6) gestützt ist, **dadurch gekennzeichnet,** daß das Druckstück (6) durch radial gegenüber der Welle (1) verstellbare Keilstücke (7) verschiebbar ist, die an mindestens einem koaxial zu der Welle (1) angeordneten und mit dieser verbundenen Stutzring (9) abgestützt und durch einen gemeinsamen Stellantrieb (11) verstellbar sind.

2. Rutschkupplung nach Anspruch 1, **dadurch gekennzeichnet,** daß die Keilstücke (7) paarweise jeweils einander gegenüberliegend an der Welle (1) angeordnet sind und der gemeinsame Stellantrieb durch jeweils eine verdrehbare Gewindestange (11) gebildet ist, die durch eine Querbohrung der Welle (1) gesteckt ist und an deren Endabschnitten jeweils gegenläufige Gewinde (11a,b) ausgebildet sind, die in entsprechenden Gewindebohrungen (7c) der Keilstücke (7) eingreifen.

3. Rutschkupplung nach Anspruch 2, **dadurch gekennzeichnet,** daß die Gewindestange (11) an mindestens einem ihrer Enden als Angriffskopf (11c) für ein Werkzeug zum Verdrehen der Gewindestange (11) ausgebildet ist.

4. Rutschkupplung nach Anspruch 1, **dadurch gekennzeichnet,** daß der gemeinsame Stellantrieb durch ein an den Keilstücken (7) anliegendes Spannband gebildet ist.

5. Rutschkupplung nach einem der vorhergehenden Ansprüche, **dadurch gekennzeichnet,** daß die den Keilstücken (7) zugeordnete Fläche des Stützrings (9) als Keilfläche ausgebildet ist.

6. Rutschkupplung nach einem der vorhergehenden Ansprüche, **dadurch gekennzeichnet,** daß zwischen dem Stützring (9) und den Keilstücken (7) ein zweites Druckstück angeordnet ist, dessen den Keilstücken (7) zugeordnete Fläche als Keilfläche ausgebildet ist.

7. Rutschkupplung nach Anspruch 6, **dadurch gekennzeichnet,** daß das zweite Druckstück als Tellerfeder (8) ausgebildet ist.

8. Rutschkupplung nach einem der vorhergehenden Ansprüche, **dadurch gekennzeichnet,** daß der Stützring (9) durch eine Einstellmutter gebildet ist, die auf ein Außengewinde (10) der Welle (1) aufschraubbar ist.

9. Rutschkupplung nach einem der vorhergehenden Ansprüche, **dadurch gekennzeichnet,** daß die Querbohrung (1c) als Langloch ausgebildet ist, dessen Öffnung sich achsparallel zur Welle (1) erstreckt.

## Claims

1. An adjustable sliding clutch (2) which is disposed coaxially of a shaft (1) and has friction discs (2c), at least one of which is spring-loaded by a pressure spring pack (5) bearing against a thrust member (6) movable coaxially of the shaft (1) to adjust the strength of the clutch, characterized in that the clutch member (6) can be displaced by wedge members (7) which can be adjusted radially in relation to the shaft (1) and which bear against at least one supporting ring (9) disposed coaxially of the shaft (1) and connected thereto and can be adjusted by a common adjusting drive (11).

2. A sliding clutch according to claim 1, characterized in that the wedge members (7) are disposed in pairs opposite one another on the shaft (1) and the common adjusting drive is formed in each case by a rotatable screwthreaded rod (11) which is inserted through a transverse bore of the shaft (1) and each of whose end portions is formed with opposite screwthreadings (11a, b) engaging in matching screwthreaded bores (7c) of the wedge members (7).

3. A sliding clutch according to claim 2, characterized in that at least one of the ends of the screwthreaded rod (11) takes the form of an engagement head (11c) for a tool for rotating the screwthreaded rod (11).

4. A sliding clutch according to claim 1, characterized in that the common adjusting drive is formed by a tension band bearing against the wedge members (7).

5. A sliding clutch according to one of the preceding claims, characterized in that the surface of the supporting ring (9) associated with the wedge members (7) takes the form of a wedge surface.

6. A sliding clutch according to one of the preceding claims, characterized in that disposed between the supporting ring (9) and the wedge members (7) is a second thrust member, whose surface associated with the wedge members (7) takes the form of a wedge surface.

7. A sliding clutch according to claim 6, characterized in that the second thrust member takes the form of a plate spring (8).

8. A sliding clutch according to one of the preceding claims, characterized in that the supporting ring (9) is formed by an adjusting nut which can be screwed on to an external screwthreading (10) of the shaft (1).

9. A sliding clutch according to one of the preceding claims, characterized in that the transverse bore (1c) takes the form of an oblong hole whose opening extends axis-parallel with the shaft (1).

## Revendications

1. Dispositif d'accouplement (2) à friction pouvant être réajusté et disposé coaxialement par rapport à un arbre (1), comprenant des disques de friction (2c) dont au moins un est mis sous contrainte au moyen d'un bloc (5) de ressorts de pression, bloc qui est supporté par une pièce (6) de pression mobile coaxialement par rapport à l'arbre (1) pour l'ajustement de la force d'accouplement, caractérisé en ce que la pièce (6) de pression peut coulisser par l'intermédiaire de pièces (7) de coin réglables radialement par rapport à l'arbre (1), pièces qui sont supportées par au moins un anneau (9) de support disposé coaxialement par rapport à l'arbre (1) et relié à celui-ci, et qui peuvent être réglées au moyen d'un vérin (11) commun.

2. Dispositif d'accouplement à friction selon la revendication 1, caractérisé en ce que les pièces (7) de coin sont agencées par paires, respectivement diamétralement opposées l'une de l'autre, sur l'arbre (1) et le vérin commun est formé par respectivement une tige filetée (11) pouvant être tournée, tige filetée qui traverse un perçage transversal de l'arbre (1) et qui comporte dans ses zones d'extrémité respectivement des filetages (11a, b) à contre sens qui sont en prise avec des perçages (7c) filetés correspondant des pièces (7) de coin.

3. Dispositif d'accouplement à friction selon la revendication 2, caractérisé en ce que la tige filetée (11) est réalisée, au moins à une de ses extrémités, avec une tête d'entraînement (11c) pour un outil pour tourner la tige filetée (11).

4. Dispositif d'accouplement à friction selon la revendication 1, caractérisé en ce que le vérin commun est formé par un collier de fixation, en contact avec les pièces (7) de coin.

5. Dispositif d'accouplement selon l'une quelconque des revendications précédentes, caractérisé en ce que la surface de l'anneau de support (9) associée aux pièces (7) de coin est réalisée sous la forme d'une surface de coin.

6. Dispositif d'accouplement à friction selon l'une quelconque des revendications précédentes, caractérisé en ce qu'une seconde pièce de pression est disposée entre l'anneau de support (9) et les pièces (7) de coin, dont la surface associée aux pièces (7) de coin est réalisée sous la forme d'une surface de coin.

7. Dispositif d'accouplement à friction selon la revendication 6, caractérisé en ce que la deuxième pièce de pression est réalisée sous la forme d'une rondelle ressort (8).

8. Dispositif d'accouplement à friction selon l'une quelconque des revendications précédentes, caractérisé en ce que l'anneau de support (9) est formé par un écrou de réglage qui peut être vissé sur le filetage extérieur (10) de l'arbre (1).

9. Dispositif d'accouplement à friction selon l'une quelconque des revendications précédentes, caractérisé en ce que le perçage transversal (1c) est réalisé comme trou oblong dont l'ouverture s'étend parallèlement à l'axe de l'arbre (1).
